# EUROPEAN PATENT SPECIFICATION

(11) **EP 1 803 528 B1**
(45) Date of publication and mention of the grant of the patent: **16.07.2008**
(21) Application number: 05795491.9
(22) Date of filing: 18.10.2005
(51) Int. Cl.: B23P 23/04, B23H 5/04, B26F 3/00, B23H 7/02

(54) **METHOD OF PROCESSING ELECTRICALLY CONDUCTIVE WORKPIECE AND COMBINED PROCESSING APPARATUS**
VERFAHREN ZUR VERARBEITUNG EINES ELEKTRISCH LEITENDEN WERKSTÜCKS UND KOMBINIERTE VERARBEITUNGSVORRICHTUNG
PROCÉDÉ DE TRAITEMENT D'UNE PIÈCE À TRAVAILLER CONDUCTRICE ÉLECTRIQUEMENT ET APPAREIL DE TRAITEMENT COMBINÉ

(30) Priority: 18.10.2004 JP 2004302976
(43) Date of publication of application: 04.07.2007
(73) Proprietor: Sodick Co., Ltd., Kanagawa 222-8522 (JP)
(72) Inventor: YOSHIDA, Shinichi, c/o Sodick Co., Ltd., Yokohama-shi, Kanagawa 2248522 (JP); DOHI, Yuzo, c/o Sodick Co., Ltd., Yokohama-shi, Kanagawa 2248522 (JP)
(74) Representative: Kensett, John Hinton
(86) International application number: PCT/JP2005/019452
(87) International publication number: WO 2006/043688

(56) References cited:
- EP-A- 0 366 466
- EP-A- 1 250 982
- WO-A1-01/36139
- JP-A- 1 164 521
- JP-A- 4 343 671
- JP-A- 5 285 739
- JP-A- 10 260 298
- JP-A- 62 120 960
- JP-A- 2003 232 370
- US-A- 5 084 602
- US-B1- 6 800 829
- ABRATE S ET AL: "MACHINING OF COMPOSITE MATERIALS. \PART II : NON-TRADITIONAL METHODS" COMPOSITES MANUFACTURING, BUTTERWORTH SCIENTIFIC, GUILDFORD, SURREY, GB, vol. 3, no. 2, January 1992 (1992-01), pages 85-94, XP000300774 ISSN: 0956-7143

## Description

### Technical Field

The present invention relates to a wire electric discharge machining method for machining a workpiece by generating electric discharge in a work gap formed between a wire electrode and a conductive workpiece. The present invention further relates to a water jet cutting method for cutting a workpiece using high pressure water jetted from a jet nozzle.

Document US-A-5,084,602 is the closest prior art for the subject matter of the independent claims of the present application and discloses a method of machining a conductive workpiece, comprising the steps of cutting the workpiece fixed to a work stand to a desired shape by laser cutting and finishing the cut surface to desired high machining accuracy using wire electric discharge machining with the workpiece still fixed to the work stand.

Furthermore it discloses a combined machining apparatus for performing laser cutting and wire cut electric discharge machining, comprising a work stand for fixing a workpiece, a wire electrode, upper and lower wire guides for supporting the wire electrode perpendicularly and a laser emitter.

### Background Art

The wire electric discharge machining method is one method capable of cutting a conductive workpiece into complex shapes. It is even possible to cut a workpiece made from a material that is difficult to cut, such as cemented carbide. The workpiece is machined using electric discharge generated in the work gap without being brought into contact with a wire electrode as a tool. Accordingly, an extremely high machining accuracy, for example, a shape accuracy of a few µm or less and a surface roughness of a few µmRz or less, is realized. In the following, dimensional accuracy, shape accuracy and surface roughness will be collectively called machining accuracy. Shape accuracy is the degree of geometric deviation from a required shape, and includes, for example, straightness, flatness, perpendicularity, parallelism and roundness, etc. The maximum rate of wire electric discharge machining in the case of using a galvanized brass wire electrode of φ 0.3 mm is 250 mm²/min - 550 mm²/min. If electrical energy supplied to the work gap is made large, machining rate increases. However, the electrical energy must be within a range in which the wire electrode does not fuse, and a larger electrical energy reduces machining accuracy. Generally, in order to balance machining accuracy and machining rate, wire electric discharge machining is divided into a number of steps. Firstly, the wire electrode is moved on a specified trajectory, and the workpiece is cut to a rough required shape with a large electrical energy. Rough machining is called first cut. At the time first cut is completed, surplus material that must be removed remains on the cut surface, and the cut surface does not have the required roughness. Next, the cut surface is finished at a required machining accuracy using a small electrical energy. Finishing is called second cut. During second cut, the wire electrode is made to move on an offset trajectory so that the size of the work gap becomes smaller. In this manner, the surplus material is removed to obtain a required dimensional accuracy, and the roughness of the cut surface is reduced to a required value. Second cut includes a number of steps to gradually achieve the required surface roughness. Normally, a smaller electrical energy is used for each subsequent step, and electric discharge is generated in a work gap of smaller size.

As a method for cutting a metal workpiece, laser machining, ion beam machining, and waterjet cutting are known. These methods achieve higher machining accuracy than electric discharge machining, but are used when high machining accuracy is not required. Abrasive waterjet cutting, where a workpiece is cut by jetting high pressure water mixed with abrasive grains from a jet nozzle, can remove material at a rate of about 10 times that of wire electric discharge machining.

Japanese patent publication No. 3137729 discloses a method of cutting location within a workpiece that require high machining accuracy using wire electric discharge machining, and cuts other location using laser machining or waterjet cutting.

Japanese patent publication No. 2928323 discloses a system where a wire electric discharge machining apparatus, laser machining apparatus and water jet cutting apparatus are provided within a factory, and a workpiece is moved about using a pallet.

Japanese patent publication No. 4-343671 discloses a method of roughly forming a recess in a workpiece by scanning the workpiece surface using a high-speed flow of liquid mixed with abrasive grains. This publication described that precision is required, the formed recess is finished using cutting, grinding, electric discharge machining, laser machining, etc.

USP 6, 800, 829 discloses a combined machining apparatus for repairing an air-cooled component. Part of the component is removed by water jet cutting, and a cooling hole is formed in the component by electric discharge machining.

An object of the present invention is to provide a method for minimizing time for cutting a conductive workpiece into a desired shape and finishing to high machining accuracy.

Another object of the present invention is to provide a method for machining a conductive workpiece making maximum use of the advantages of both water jet cutting and wire electrode discharge machining.

A further object of the present invention is to provide a simplified combined machining apparatus for minimizing time for cutting a conductive workpiece into a desired shape and finishing to high machining accuracy.

### Disclosure of the Invention

With the method of the present invention, a conductive workpiece fixed to a work stand is cut to a desired shape by water jet cutting, and the cut surface is then finished to desired high machining accuracy using wire electric discharge machining with the workpiece still fixed to the work stand.

Accordingly, the time from completion of water jet cutting to commencement of wire electric discharge machining is shortened.

According to the present invention, a combined machining apparatus for performing water jet cutting and wire cut electric discharge machining includes:
a work stand for fixing a workpiece,
a jet nozzle capable of being moved between an operating position where the workpiece can be cut and a refuge position separated from the operating position, for jetting high pressure water towards the workpiece,
a wire electrode, and
upper and lower wire guides for supporting the wire electrode perpendicularly, wherein the upper wire guide can move between the operating position and the refuge position separated from the operating position.

Preferred embodiments are presented in the dependent claims.

Preferably, the combined machining apparatus includes a work tank for holding machining fluid, and the work tank also functions as a catcher tank.

Other novel features of the invention will be described in the following description.

### BRIEF DESCRIPTION OF THE DRAWINGS

Fig. 1 is a front elevation illustrating a combined machining apparatus of the present invention with a jet nozzle facing the workpiece.
Fig. 2 is a front elevation illustrating the combined machining apparatus of Fig. 1, with a wire electrode suspended perpendicularly close to the workpiece.
Fig. 3 is a block diagram illustrating a control system belonging to the combined machining apparatus of Fig. 1.
Fig. 4 is a circuit diagram illustrating a fluid supply system belonging to the combined machining apparatus of Fig. 1.

### DETAILED DESCRIPTION OF THE PREFERRED EMBODIMENTS

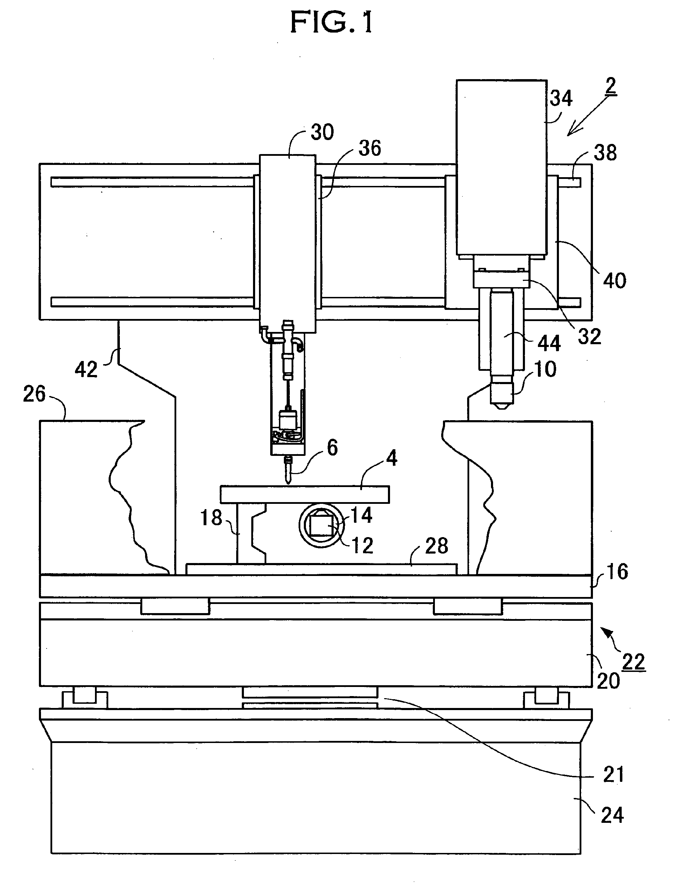

A combined machining apparatus of the present invention will now be described with reference to Fig. 1, Fig. 2, Fig. 3 and Fig. 4.

The combined machining apparatus **2** includes a jet nozzle **6,** a wire electrode **8,** and a movement unit **22** for moving the wire electrode **8** or the jet nozzle **6** relative to the workpiece **4.** The jet nozzle **6** can jet high-pressure water downwards towards a workpiece **4** for water jet cutting. The wire electrode **8** is suspended perpendicularly close to the workpiece **4,** for wire electric machining. Upper and lower wire guide assemblies **10** and **12** are opposite each other either side of the workpiece **8,** and house upper and lower wire guides (not shown) for perpendicularly supporting the wire electrode **8.** The lower guide assembly **12** is attached to a tip end of a lower arm **14.** By using well-known means, the wire electrode **8** is supplied from a bobbin to the work gap, and further fed through the lower arm **14** to an appropriate recovery box. The workpiece **4** is fixed to a work stand **18** which is provided on a table **16.** The table **16** is mounted on a saddle **20,** and is moveable in the direction of the horizontal X axis by a linear motor (not shown). The saddle **20** is mounted on a bed **24,** and is capable of being moved in the direction of the Y axis orthogonal to the X axis by a linear motor **21.** The table **16,** saddle **20** and linear motors for driving these components constitute the movement unit **22.** The saddle **20** is mounted on the bed **24.** Four wall surfaces surrounding the workpiece **4** are provided on the table **16,** forming a work tank **26** that holds machining fluid. The lower arm **14** passes through the wall of the work tank **26** in a watertight manner, and is supported on a column **42.** The column **42** is erected on the bed **24.** The work tank **26** achieves a function for immersing the workpiece **4** in dielectric fluid, and also a function as a splashguard. The work tank **26** filled with machining fluid has a function of a catcher tank for catching a high-pressure water jet. A mat material **28** that is not damaged even if the high-pressure water jet is received is provided above the table **16.** The movement unit **22** includes a machining head **30** and a transmission mechanism (not shown). The machining head **30** is moveable in the direction of Z axis perpendicular to the horizontal XY plane. The jet nozzle **6** is perpendicularly attached to the machining head **30.** The transmission mechanism is comprised of a servo motor for driving the machining head **30,** a ball screw and a nut. The movement unit **22** further includes a taper cutting device **32.** The taper cutting device **32** includes a moving body moving in the direction of a U axis parallel to the X axis, a moving body moving in the direction of a V axis parallel to the Y axis, and a transmission mechanism for each moving body. Each transmission mechanism is comprised of a servo motor, a ball screw and a nut. The wire electrode **8** between the upper and lower wire guides can be inclined with respect to the workpiece by the taper cutting device **32.** The movement unit **22** includes a machining head **34** and a transmission mechanism for that head. An automatic wire threader **44** for feeding the wire electrode **8** between the upper and lower wire guides is provided in the machining head **34.** An upper guide assembly **10** is attached to the machining head **34** using an appropriate upper arm and the taper cutting device **32.** The transmission mechanism is comprised of a servo motor for driving the machining head **34,** a ball screw and a nut. A well-known tilting device for tilting the jet nozzle **6** to vary the direction in which the high pressure water is jetted, may be provided on the machining head **30.**

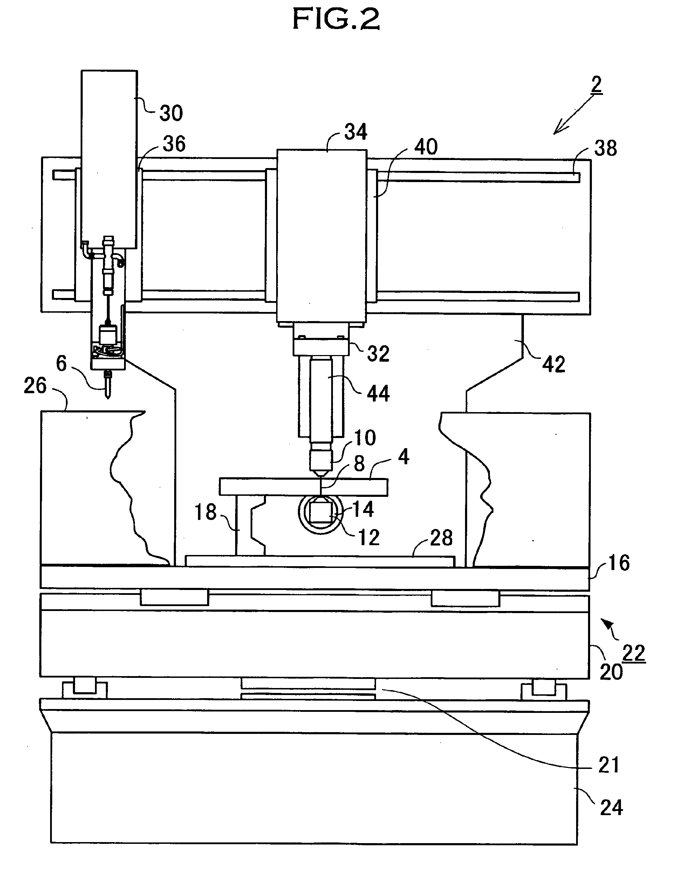

The machining head **30** is fixed to a slider **36,** and the machining head **34** is fixed to a slider **40.** The sliders **36** and **40** can reciprocate in a direction parallel to the X axis on a guide rail **38.** The movement unit **22** comprises the sliders **36** and **40,** and linear motors (not shown) for driving these sliders. The guide rail **38** is provided on an upper front surface of the column **42.** In this way, the jet nozzle **6** can be moved between an operating position where the workpiece **4** can be cut and a refuge position separated from the operating position. In Fig. 1 and Fig. 2, the operating position is substantially in the center of the combined machining apparatus **2,** above the workpiece **4.** The refuge position for the jet nozzle **6** is separated from the operating position by such an extent that it does not hinder the wire electric discharge machining. The upper wire guide can move between the operating position and another refuge position separated from the operating position. The refuge position for the upper wire guide is separated from the operating position by such an extent that it does not hinder the waterjet cutting. The jet nozzle **6** and the upper wire guide share the operating position. The above-described structure has the advantage that it is possible to make the size of the table **16** comparatively small.

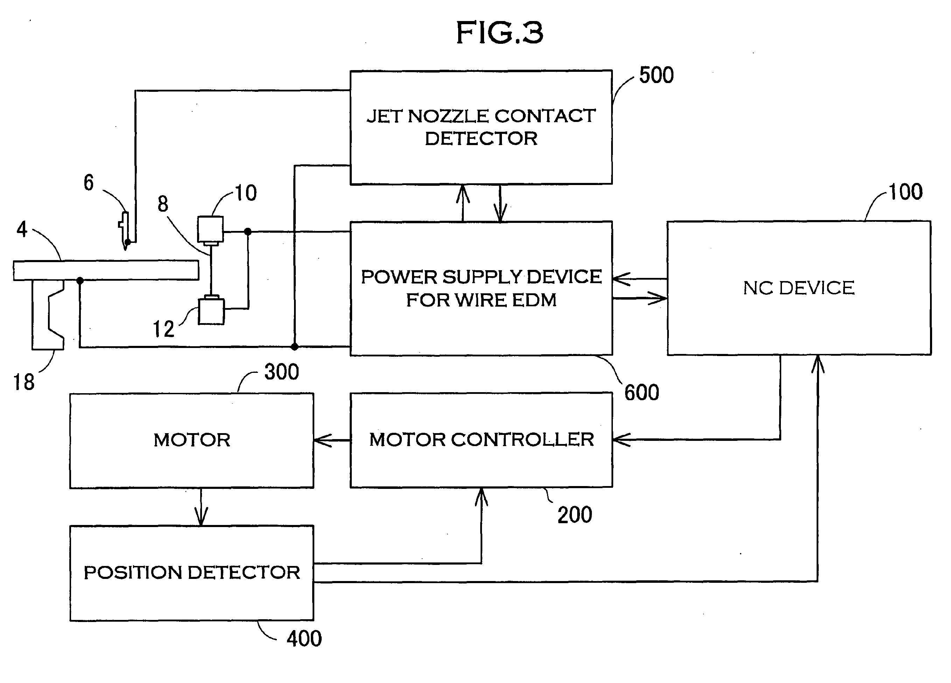

A control system belonging to the combined machining apparatus **2** will now be described with reference to Fig. 3. An NC device **100** and a motor controller **200** control the movement unit **22** based on machining data. Machining data is, for example, NC data obtained by decoding of an NC program. The NC program is created in accordance with information relating to a shape to be formed in a workpiece **4.** Information relating to shape includes, for example, required dimensional accuracy and surface roughness. The NC data includes information relating to commands, information relating to trajectories of the jet nozzle **6** and the wire electrode **8,** information relating to a plurality of positions on the trajectories, and information relating to correction amounts and machining conditions, etc. The motor **300** in Fig. 3 collectively represents all actuators for moving the moving bodies. The position detector **400** collectively represents all position detectors provided on the moving bodies or motors. The position detector **400** is a linear encoder comprising an optical reader and a scale. A rotary encoder may be provided on a rotary servo motor. Detection signals from the position detector **400** are fed back to the motor controller **200,** and also supplied to the NC device **100.** A jet nozzle contact detector **500** is means for electrically detecting contact between the jet nozzle **6** and the workpiece **4.** At least part of the jet nozzle **6** is comprised of conductive material, and electrically connected to a power supply inside the contact detector **500.** The contact detector **500** receives command signals from the NC device 100, and applies a voltage to the jet nozzle **6** and the workpiece **4.** Detection signals from the contact detector **500** are supplied to the NC device **100.** A power supply **600** for the wire electric discharge machining supplies a power pulse to cause electric discharge in a work gap formed between the traveling wire electrode **8** and the workpiece **4.** The NC device **100** sends command signals to the power supply **600** based on the settings of machining conditions. The power supply **600** has a contact detector for electrically detecting contact between the wire electrode **8** and the workpiece **4.** The NC device **100** receives detection signals from the contact detector, and locates a reference position for the workpiece 4.

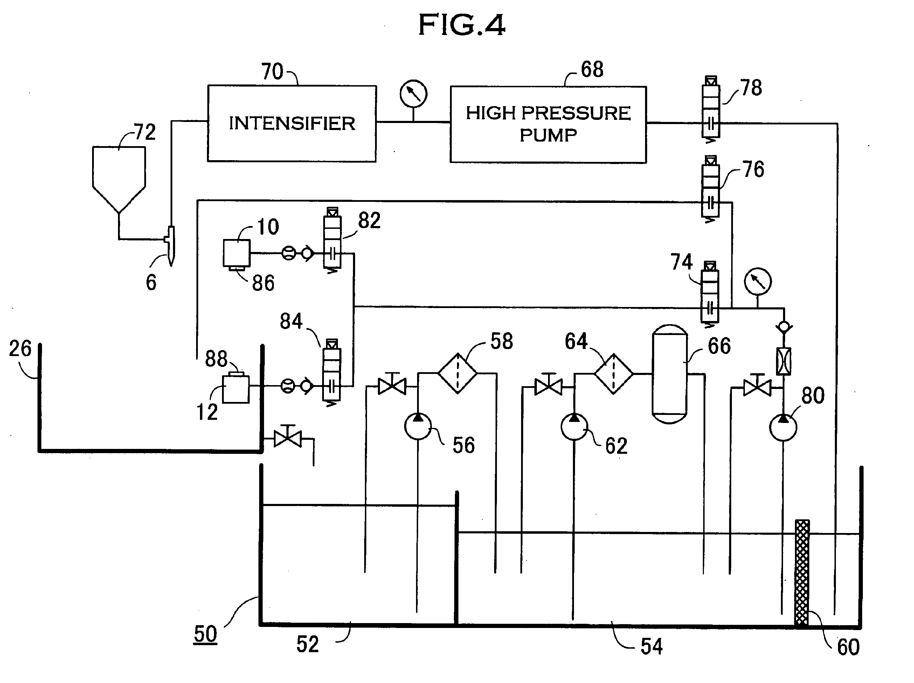

A fluid supply system belonging to the combined machining apparatus **2** will now be described with reference to Fig. 4. The fluid supply system is controlled by the NC device **100** in Fig. 3. Machining fluid used in wire electric discharge machining is water-based dielectric fluid. Machining fluid used in waterjet cutting is water mixed with abrasive grains of the same particle size at a certain percentage. A storage tank **50** has a dirty fluid tank **52** for storing machining fluid that has been used, and a clean fluid tank **54** for storing machining fluid that has been purified. Machining fluid discharged from the work tank **26** is collected in the dirty fluid tank **52.** Machining swarf with high specific gravity is deposited at the bottom of the dirty fluid tank **52.** Machining fluid in the dirty fluid tank **52** is fed by a pump **56** to the clean fluid tank **54** via a filter **58.** The filter **58** removes machining swarf and abrasive grains to purify the machining fluid. The clean fluid tank **54** is partitioned by a filter **60** that will pass neither small sized machining swarf or abrasive grains. A circulation pipeline having a pump **62,** a filter **64** and an ion exchange resin tank **66** is provided in the clean fluid tank **54.** Resistivity of the machining fluid is kept at a value required for wire electric discharge machining by the ion exchange resin tank **66.** Machining fluid inside the clean fluid tank **54** is supplied through a solenoid valve **78,** high pressure pump **68** and pressure intensifier **70** to the jet nozzle **6.** The high pressure pump **68** and pressure intensifier **70** can generate high pressure water at 200 MPa - 450 MPa. An optimum amount of abrasive grains are supplied from a hopper **72** to a mixing chamber inside the jet nozzle **6.** In order to fill the work tank **26** with machining fluid, machining fluid inside the clean fluid tank **54** is fed by a pump **80** through a solenoid valve **76** to the work tank **26.** During wire electric discharge machining, the solenoid valves **76** and **78** are closed, and machining fluid is supplied by the pump **80** from the clean fluid tank **54** through the solenoid valve **74,** and guide assemblies **10** and **12** to the work gap. The upper and lower guide assemblies **10** and **12** are respectively provided with flushing nozzles **86** and **88** for jetting machining fluid towards the work gap. Solenoid valves **82** and **84** are provided in order to stop a flushing from one of the flushing nozzles **86** and **88.**

A method of machining a conductive workpiece **4** according to the present invention will now be described.

First of all, the workpiece **4** is correctly located within the XY plane and in the Z axis direction. After that, the workpiece **4** is cut into a desired shape by waterjet cutting.

An operator firstly fixes the workpiece **4** to the work stand **18** using an appropriate fastening device. The workpiece **4** has a locating hole used for locating. The operator then moves the jet nozzle **6** from the refuge position to the operating position, and an NC program for locating is decoded in the NC device **100.** The NC device **100** sends movement commands representing position and velocity to the motor controller **200,** and operates the jet nozzle contact detector **500.** The NC device **100** moves the jet nozzle **6** in four directions of X+, X-, Y+ and Y- within the locating hole in accordance with the NC program for locating. If the contact detector **500** detects contact between the jet nozzle **6** side surface and the workpiece **4** movement of the table **16** and the saddle **20** is immediately stopped. The contact position is stored in the NC device **100.** The NC device **100** holds outer diameter data for the jet nozzle **6,** and determines the center of the locating hole to be a reference position based on a plurality of contact positions. It is also possible to set the reference position by obtaining end surfaces of the workpiece **4** instead of the locating hole. The tip of the jet nozzle **6** contacts the upper surface of the workpiece **4,** and the upper surface of the workpiece **4** is located. The jet nozzle **6** is positioned a specified distance above the upper surface of the workpiece **4** by raising the machining head **30.** The position detector **400** detects the position of the jet nozzle **6,** and the NC device **100** determines the detected position to be a reference position for the Z axis direction. The specified distance is a few tens of mm, and the reference position is correctly determined in units of 1 µm. In this manner, locating of the workpiece **4** is completed. The operator then fills the work tank **26** with machining fluid and executes an NC program. The NC device **100** sequentially decodes the NC program to advance waterjet cutting under set machining conditions. The motor controller **200** receives movement commands calculated by the NC device **100.** The jet nozzle **6** is positioned at a machining start point, and a high pressure water jet at 200 MPa or greater mixed with abrasive grains is jetted towards the workpiece **4** from the jet nozzle **6.** The jet nozzle **6** is moved on a specified trajectory relative to the workpiece **4.** In this way, a desired shape is roughly cut in the workpiece **4** at a machining rate of 10 times that with wire electric discharge machining. If cutting of the desired shape is completed, the operator moves the jet nozzle **6** from the operating position to the refuge position. When the cut shape includes a through hole, the operator removes sections from in side the workpiece **4** corresponding to the through hole.

Next, in order to finish the cut surface to a desired machining accuracy, the workpiece **4** is subjected to wire electric discharge machining while still fixed to the work stand **18.** The operator does not need to fix and locate the workpiece **4** again in preparation for finishing. Also, since the environment around the workpiece **4** does not vary greatly, high machining accuracy is ensured. The operator moves the upper wire guide in the upper guide assembly **10** from the refuge position to the operating position. The wire electrode **8** is passed through the upper wire guide, the through hole formed in the workpiece **4,** and the lower wire guide by the automatic wire threader **44.** If the operator executes an NC program for wire electric discharge machining, the NC device **100** sequentially decodes the NC program to advance wire electric discharge machining under set machining conditions. The wire electrode **8** travels along a transport path, and machining fluid is jetted from the flushing nozzles **86** and **88** towards the workpiece **4.** The power supply **600** supplies a power pulse to the work gap in accordance with machining conditions. The wire electrode **8** suspended between the pair of wire guides is positioned at the same machining start point relative to the workpiece **4** as for waterjet cutting. The wire electrode **8** is moved towards the cut surface, and moved further along the cut surface on the specified trajectory. Wire electric discharge machining includes a number of steps which vary set conditions depending on required accuracy. In later steps, a smaller energy power pulse is applied to the work gap. In the final step, a small power pulse that makes it possible to reduce surface roughness of the cut surface to a required value is used. In this manner, with high machining accuracy of, for example, a shape accuracy of a few µm or less and a surface roughness of a few µmRz or less, that is not possible with waterjet cutting, is realized.

## Claims

1. A method of machining a conductive workpiece (4), comprising the steps of:
cutting the workpiece fixed to a work stand (18) to a desired shape by water jet cutting;
finishing the cut surface to desired high machining accuracy using wire electric discharge machining with the workpiece still (4) fixed to the work stand (18).

2. A combined machining apparatus (2) for performing water jet cutting and wire cut electric discharge machining, comprising:
a work stand (18) for fixing a workpiece (4);
a jet nozzle (6) capable of being moved between an operating position where the workpiece can be cut and a refuge position separated from the operating position, for jetting high pressure water towards the workpiece;
a wire electrode (8); and
upper and lower wire guides (10,12) for supporting the wire electrode (8) perpendicularly;
wherein the upper wire guide (10) can move between the operating position and a refuge position separated from the operating position.

3. The combined machining apparatus of claim 2 further comprising a table (16) on which the work stand (8) is provided and is moveable in an XY plane

4. The combined machining apparatus of claim further comprising a work tank (26) which surrounds the workpiece (4) and holds machining fluid.

5. The combined machining apparatus of claim 4 further comprising a dirty fluid tank (52) for collecting machining fluid discharged from the work tank, a purifying device (58) for purifying machining fluid in the dirty fluid tank (52), a clean fluid tank (54) for storing machining fluid that has been purified, a high pressure pump (68) for supplying machining fluid from the clean fluid tank to the jet nozzle (6), and an ion exchange resin tank (66) for ion exchanging machining fluid in the clean fluid tank (54).

## Patentansprüche

1. Verfahren zum Bearbeiten eines leitfähigen Werkstücks (4), das die Verfahrenschritte umfasst:
- Zuschneiden in eine gewünschte Form des an einem Arbeitsgestell befestigten Werkstücks durch Wasserstrahlschneiden,
- Fertigbearbeiten der Schnittfläche mit einer gewünschten hohen Bearbeitungsgenauigkeit mittels funkenerosiver Bearbeitung, wobei das Werkstück (4) nach wie vor an dem Arbeitsgestell (18) befestigt ist.

2. Kombinierte Bearbeitungsvorrichtung (2) zur Durchführung von Wasserstrahlschneiden und Drahtschneidefunkenerosionsbearbeitung, umfassend:
- ein Arbeitsgestell (18) zur Befestigung eines Werkstücks (4),
- eine zwischen einer Arbeitsposition, in der das Werkstück zugeschnitten werden kann, und einer von der Arbeitsposition separaten Schutzposition bewegbare Strahldüse (6) zum Ausstoßen von Hochdruckwasser in Richtung des Werkstücks;
- eine Drahtelektrode (8), sowie
- eine obere und eine untere Drahtführung (10, 12) zur senkrechten Abstützung der Drahtelektrode (18),
- wobei die obere Drahtführung (10) zwischen der Arbeitsposition und einer von der Arbeitsposition separaten Schutzposition bewegbar ist.

3. Kombinierte Bearbeitungsvorrichtung gemäß Anspruch 2, ferner einen Tisch (16) umfassend, auf dem das Arbeitsgestell (18) vorgesehen und in einer xy-Ebene bewegbar ist.

4. Kombinierte Bearbeitungsvorrichtung gemäß Anspruch 2, ferner einen das Werkstück (4) umgebenden und Bearbeitungsflüssigkeit aufnehmenden Arbeitsbehälter (26) umfassend.

5. Kombinierte Bearbeitungsvorrichtung gemäß Anspruch 4, ferner umfassend: einen Schmutzflüssigkeits-Behälter (52) zum Sammeln von aus dem Arbeitsbehälter ausgetragener Bearbeitungsflüssigkeit, eine Reinigungsvorrichtung (58) zum Reinigen von Bearbeitungsflüssigkeit in dem Schmutzflüssigkeits-Behälter (52), einen Reinflüssigkeits-Behälter (54) zum Speichern von gereinigter Bearbeitungsflüssigkeit, eine Hochdruckpumpe (68) für die Zuführung von Bearbeitungsflüssigkeit aus dem Reinflüssigkeits-Behälter zu der Strahldüse (6) und einen Ionenaustauschharzbehälter (66), um Bearbeitungsflüssigkeit in dem Reinflüssigkeits-Behälter (54) einem Ionenaustausch zu unterziehen.

## Revendications

1. Procédé d'usinage d'une pièce à travailler conductrice (4), comportant les étapes consistant à :
découper la pièce à travailler fixée sur un support de travail (18) en une forme souhaitée par découpe à jet d'eau ;
effectuer un finissage de la surface découpée selon une haute précision d'usinage souhaitée en utilisant un usinage par décharge électrique à fil, la pièce à travailler (4) étant toujours fixée sur le support de travail (18).

2. Appareil d'usinage combiné (2) permettant d'effectuer la découpe à jet d'eau et l'usinage par décharge électrique à fil de coupe, comportant :
un support de travail (18) permettant de fixer une pièce à travailler (4);
une buse (6) capable d'être déplacée entre une position de fonctionnement comme quoi la pièce à travailler peut être découpée et une position de refuge séparée de la position de fonctionnement, à des fins de jet d'eau haute pression vers la pièce à travailler;
un fil électrode (8) ; et
un guide-fil supérieur (10) et un guide-fil inférieur (12) permettant de supporter le fil électrode (8) de manière perpendiculaire ;
le guide-fil supérieur (10) pouvant se déplacer entre la position de fonctionnement et une position de refuge séparée de la position de fonctionnement.

3. Appareil d'usinage combiné selon la revendication 2, comportant par ailleurs une table (16) sur laquelle le support de travail (8) est mis en oeuvre et peut être déplacé dans un plan XY.

4. Appareil d'usinage combiné selon la revendication 2, comportant par ailleurs un réservoir d'usinage (26) qui entoure la pièce à travailler (4) et retient le fluide d'usinage.

5. Appareil d'usinage combiné selon la revendication 4, comportant par ailleurs un réservoir de fluide sale (52) permettant de collecter le fluide d'usinage déchargé en provenance du réservoir d'usinage, un dispositif de purification (58) permettant de purifier le fluide d'usinage dans le réservoir de fluide sale (52), un réservoir de fluide propre (54) permettant de stocker le fluide d'usinage ayant été purifié, une pompe haute pression (68) permettant d'alimenter le fluide d'usinage en provenance du réservoir de fluide propre jusqu'à la buse (6), et un réservoir de résine échangeuse d'ions (66) à des fins d'échange d'ions du fluide d'usinage dans le réservoir de fluide propre (54).
